# EUROPÄISCHE PATENTSCHRIFT

(11) **EP 3 325 802 B1**
(45) Veröffentlichungstag und Bekanntmachung des Hinweises auf die Patenterteilung: **15.05.2019**
(21) Anmeldenummer: 16782179.2
(22) Anmeldetag: 19.09.2016
(51) Int. Cl.: F03D 80/60, F03D 80/70, F01M 11/00

(54) **LUFTGEKÜHLTER ÖLTANK UND WINDENERGIEANLAGE MIT LUFTGEKÜHLTEM ÖLTANK**
AIR-COOLED OIL TANK, AND WIND TURBINE COMPRISING AN AIR-COOLED OIL TANK
RÉSERVOIR D'HUILE REFROIDI PAR AIR ET ÉOLIENNE COMPRENANT UN RÉSERVOIR D'HUILE REFROIDI PAR AIR

(30) Priorität: 30.11.2015 DE 102015120706
(43) Veröffentlichungstag der Anmeldung: 30.05.2018
(73) Patentinhaber: aerodyn consulting Singapore pte ltd, Singapore 188024 (SG)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2016/100437
(87) Internationale Veröffentlichungsnummer: WO 2017/092725

(56) Entgegenhaltungen:
- CN-U- 202 900 551
- KR-A- 20110 114 430
- US-A1- 2004 206 312

## Beschreibung

Die Erfindung betrifft einen luftgekühlten Öltank mit einer Mehrzahl von den Öltank durchziehenden, zur Durchleitung von Kühlluft eingerichteten Rohrleitungen mit im Wesentlichen identischem Durchmesser. Die Erfindung betrifft auch eine Windenergieanlage mit einem luftgekühlten Öltank.

Ein eingangs genannter luftgekühlter Öltank ist beispielsweise aus der KR 20060022570 A bekannt. Dieser bekannte Öltank ist insbesondere zur Aufnahme von Hydrauliköl eingerichtet, wobei die Kühlung des Hydrauliköls dadurch erfolgt, dass von einem außerhalb des Tanks angeordneten Ventilator Kühlluft in die den Öltank in Längsrichtung durchziehenden Rohrleitungen gedrückt wird.

Die KR 20060022570 A stellt dabei fest, dass gegenüber wassergekühlten Hydrauliköltanks der Vorteil besteht, dass ein Wärmetauscher für den Wasserkreislauf und die Gefahr einer Kontamination des Wasserkreislaufs mit Öl entfällt. Ein luftgekühlter Öltank ist daher weniger aufwändig und im Hinblick auf seine Sicherheit und Schadensanfälligkeit einfacher herzustellen.

Aufgrund dieser zuletzt genannten Überlegungen findet die Luftkühlung von Schmier- und Hydrauliköl bevorzugt auch in Windenergieanlagen Verwendung. Beispielsweise zeigt die US 2011/0272949 A1 eine Windenergieanlage mit einem zwischen einem Öltank und einem Wärmetauscher gebildeten geschlossenen Ölkreislauf, wobei der nicht näher spezifizierte Wärmetauscher in einem offenen Kühlluftkreislauf eingebracht ist und luftgekühlt wird.

Eine andere luftgekühlte Windenergieanlage geht beispielsweise aus der EP 2 163 761 A1 hervor. Ein weiterer Wärmetauscher ist beispielsweise aus der US2012/0006524 A1 bekannt.

Es ist zwar grundsätzlich denkbar, dass auch der aus der KR 20060022570 A bekannte luftgekühlte Öltank, der ohne zusätzlichen Wärmetauscher auskommt, in Windenergieanlagen zum Einsatz kommen kann. Aufgrund der durch die Auslegung der einzelnen Komponenten der Windenergieanlage auferlegten Beschränkungen, insbesondere den Anforderungen an einen kompakten Aufbau, wäre ein Einbau des bekannten Öltanks allerdings zu raumgreifend.

Aufgabe der Erfindung ist es daher, einen luftgekühlten Öltank, insbesondere einen für Windenergieanlagen geeigneten luftgekühlten Öltank zu schaffen, der besonders platzsparend ausgebildet ist.

Diese Aufgabe wird erfindungsgemäß durch den luftgekühlten Öltank mit den Merkmalen von Anspruch 1 und die Windenergieanlage mit den Merkmalen von Anspruch 6 gelöst. Die Unteransprüche geben jeweils vorteilhafte Ausgestaltungen der Erfindung wieder.

Grundgedanke der Erfindung ist es, einen luftgekühlten Öltank so auszubilden, dass die den Öltank durchströmende Luft nicht nur zur Kühlung des im Öltank vorgehaltenen Öls, sondern auch zur Kühlung außerhalb des Öltanks bzw. unabhängig vom Öltank angeordneten Komponenten verwendet werden kann.

Erfindungsgemäß ist daher ein luftgekühlter Öltank mit einer Mehrzahl von den Öltank durchziehenden, zur Durchleitung von Kühlluft eingerichteten ersten Rohrleitungen vorgesehen, die einem im Wesentlichen identischem Durchmesser aufweisen, wobei zusätzlich eine den Öltank durchziehende, zur Durchleitung von Kühlluft eingerichtete zweite Rohrleitung vorgesehen ist, in deren Durchmesser ein Ventilator angeordnet ist, wobei der Durchmesser der zweiten Rohrleitung größer als der Durchmesser der ersten Rohrleitungen ist.

Der Tank ist bevorzugt aus Aluminium gefertigt und kann einen einzigen Hohlraum aufweisen oder in mehrere Kammern unterteilt sein. Nach einer besonderen Ausgestaltung weist der Öltank eine Kammer zur Bevorratung von Schmieröl und/oder eine Kammer zur Bevorratung von Hydrauliköl auf.

Die Rohrleitungen sind insbesondere als Strangpressprofile ausgebildet, wobei speziell die ersten Rohrleitungen für einen guten Wärmeübergang mit Innenrippen ausgebildet sein können.

Die Grundfläche der Rohrleitungen kann rund, aber auch drei- vier-, sechs- oder achteckig ausgebildet sein. Zur Herstellung des Öltanks können die Rohrleitungen an die entsprechend mit Öffnungen versehene Boden- und Deckplatte des Tanks angeschweißt werden, wobei die auf der Oberfläche mündenden Öffnungen der Rohrleitungen als den Luftein- bzw. austritt erleichternde Düsen ausgebildet sein können.

Dabei sind die ersten Rohrleitungen ausschließlich zur Kühlung des im Öltank vorgehaltenen Öls vorgesehen. Die zweite Rohrleitung, deren Durchmesser bevorzugt um ein Vielfaches größer ist als der Durchmesser der ersten Rohrleitungen, wird dazu verwendet, Kühlluft durch den Öltank durchzuleiten, ohne dass die Kühlkapazität der durchgeleiteten Luft erschöpft ist und zur Kühlung insbesondere des Generators verwendet werden kann.

Zur Regelung des die zweite Rohrleitung durchströmenden Luftstroms ist erfindungsgemäß im Durchmesser der zweiten Rohrleitung ein Ventilator angeordnet. Der Ventilator ist insbesondere von der Temperatur des Generators abhängig drehzahlgeregelt, sodass die Kühlleistung an die Verlustleistung des Generators angepasst werden kann. Die Drehzahlregelung kann stufenlos erfolgen oder als Stufenschaltung ausgelegt sein.

Nach einer besonders bevorzugten Ausgestaltung ist der Antriebsmotor des Ventilators ein Hydraulikmotor, sodass sich ein synergistischer Effekt aus Hydrauliköl vorhaltendem Öltank und Einrichtung zur Luftkühlung des Generators ergibt.

Wird die zweite Rohrleitung in ihrer Funktion eher als Bypass verwendet, soll also die Kühlkapazität beim Durchleiten durch die zweite Rohrleitung möglichst nicht verringert werden, kann die Wandung der zweiten Rohrleitung dicker als die Wandungen der ersten Rohrleitungen ausgebildet oder die Innenwandung der zweiten Rohrleitung wärmeisolierend beschichtet oder ausgekleidet sein.

Um grundsätzlich gleichermaßen einen durch die ersten Rohrleitungen und die zweite Rohrleitung führenden Kühlluftstrom gewährleisten zu können, entspricht die Durchtrittsfläche aller ersten Rohrleitungen in etwa der Durchtrittsfläche der zweiten Rohrleitung.

Schließlich ist bevorzugt vorgesehen, dass die ersten Rohrleitungen und die zweite Rohrleitung parallel zueinander angeordnet sind, sodass die Herstellung des erfindungsgemäßen Öltanks besonders einfach ist.

Damit die durch den Öltank geführte Luft nicht ausschließlich durch die (großlumige) zweite Rohrleitung geführt wird, wird in den meisten Fällen ein Anschluss des Öltanks an zwei wenigstens teilweise getrennte Luftstromkreisläufe notwendig sein. Der eine Luftstromkreislauf steht dann mit den ersten Rohrleitungen und der andere Luftstromkreislauf mit der zweiten Rohrleitung kommunizierend in Verbindung.

Desweiteren ist eine Windenergieanlage mit einem luftgekühlten Öltank vorgesehen, wobei der luftgekühlte Öltank eine Mehrzahl von den Öltank durchziehenden, zur Durchleitung von Kühlluft eingerichteten ersten Rohrleitungen mit im Wesentlichen identischem Durchmesser und eine den Öltank durchziehende, zur Durchleitung von Kühlluft eingerichtete zweite Rohrleitung, deren Durchmesser größer als der Durchmesser der ersten Rohrleitungen ist, aufweist, wobei die ersten Rohrleitungen mit einem ersten Kühlluftkreislauf und die zweite Rohrleitung mit einem zweiten Kühlluftkreislauf kommunizierend in Verbindung stehen. Bevorzugt ist der Generator der Windenergieanlage im zweiten Kühlluftkreislauf angeordnet.

Dadurch ist es möglich zwei wenigstens teilweise voneinander getrennte Kühlkreisläufe auszubilden, wobei der eine Kühlkreislauf zur Luftkühlung des Generators und der andere Kühlkreislauf zur Luftkühlung anderer Komponenten, beispielsweise des Getriebes und/oder des Hydraulikaggregats, verwendet wird.

Das Verhältnis der Durchtrittsfläche aller ersten Rohrleitungen zur Durchtrittsfläche der zweiten Rohrleitung ist dabei vom Kühlbedarf der im ersten Kühlkreislauf bzw. zweiten Kühlkreislauf angeordneten Komponenten entsprechend deren Verlustleistung abhängig. Insbesondere ist bei der Auslegung des Öltanks darauf zu achten, dass das Verhältnis von Ölmenge, Füllstandhöhe und Querschnittsfläche der ersten Rohrleitungen eine ausreichende Kühlung (d.h. ein ausreichendes ΔT) des Öls erzielt.

Weist der Öltank nach einer bevorzugten Ausgestaltung Ölpumpen auf, sind diese im Verhältnis zum Rücklauf an gegenüberliegenden Orten des Öltanks angeordnet, damit das in den Öltank rücklaufende erwärmte Öl eine möglichst lange Strecke zwischen den Rohrleitungen zurücklegt und ausreichend gekühlt werden kann.

Der erste Kühlluftkreislauf und der zweite Kühlluftkreislauf sind nach einer bevorzugten Ausgestaltung geschlossen ausgebildet, wobei besonders bevorzugt sich der zweite Kühlluftkreislauf stromabwärts des Generators mit dem ersten Kühlluftkreislauf vereinigt. Die Ausbildung als geschlossene Kühlluftkreisläufe hat den Vorteil, dass keine verschmutzte und aufwändig zu reinigende Kühlluft mit den in der Windenergieanlage angeordneten, zu kühlenden Komponenten in Berührung kommt.

Zum Antrieb des ersten bzw. zweiten Kühlkreislaufs sind zusätzlich zu einem im Öltank vorgesehenen Ventilator weitere Ventilatoren in den Kühlkreisläufen vorgesehen.

Alternativ zu dem im Öltank bevorzugt vorgesehenen Ventilator kann an anderer Stelle im zweiten Kühlkreislauf ein Ventilator, z.B. der Eigenlüfter des Generators, zum Erzeugen eines Luftstroms im zweiten Kühlkreislauf vorgesehen sein. In diesem Fall ist in der zweiten Rohrleitung eine Klappenmechanik vorgesehen, die die durch die zweite Rohrleitung geführte Luftmenge regulieren kann. Dabei wird die Klappenstellung - wie auch zuvor die Leistung des im Öltank angeordneten Ventilators - bevorzugt von der Temperatur des Generators abhängig gemacht.

Grundsätzlich kann auch der in der erfindungsgemäß ausgestalteten Windenergieanlage verbaute luftgekühlte Öltank wie zuvor für den Öltank als eigenständiges Produkt beschrieben ausgestaltet sein. Insbesondere kann also im Durchmesser der zweiten Rohrleitung ein Ventilator angeordnet sein. Der Antriebsmotor dieses Ventilators ist bevorzugt ein Hydraulikmotor.

Weiter bevorzugt entspricht die Durchtrittsfläche aller ersten Rohrleitungen der Durchtrittsfläche der zweiten Rohrleitung.

Speziell können auch die ersten Rohrleitungen des Öltanks der Windenergieanlage Innenrippen aufweisen.

Schließlich sind auch die ersten Rohrleitungen und die zweite Rohrleitung bevorzugt parallel angeordnet.

Der luftgekühlte Öltank nach der Erfindung weist den Vorteil auf, dass die für das Getriebe erforderliche Ölkühlung und die für den Generator erforderliche Luftkühlung in einer kompakten Baueinheit realisiert sind. Für die Kühlung sowohl des Getriebes wie auch des Generators ist keine Wasserkühlung, kein weiterer Wärmetauscher und auch keine komplizierte, die Kühlleistung regelnde Steuerung notwendig.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine geschnittene perspektivische Ansicht einer erfindungsgemäß ausgestalteten Windenergieanlage;
- Fig. 2: eine Draufsicht auf den luftgekühlten Öltank nach der Erfindung; und
- Fig. 3: eine Seitenansicht des luftgekühlten Öltanks.

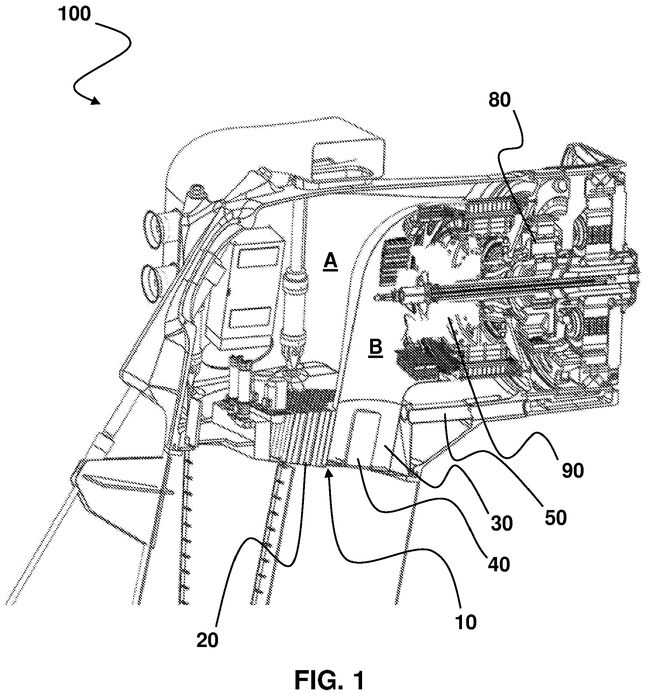

Fig. 1 zeigt eine geschnittene perspektivische Ansicht eines Ausschnitts einer erfindungsgemäß ausgestalteten Windenergieanlage. Die Windenergieanlage 100 weist - wie bekannt - einen Turm und einer auf dem Turm angeordneten, eingehausten Energiewandlungseinheit auf. Die Energiewandlungseinheit besteht aus einem Rotor, der in einem Rotorlager gelagert ist, einem Getriebe 80 und einem (nicht näher dargestellten) Generator 90.

Der luftgekühlte Öltank 10 ist im gezeigten Beispiel im Bereich zwischen Turm und Kopfträger der Windenergieanlage 100 angeordnet und nimmt - mit Ausnahme eines verschließbaren Mannlochs - den gesamten Turmdurchmesser im Bereich des Kopfträgers ein. Dabei bildet die Oberseite des Öltanks 10 eine waagerechte Fläche aus.

Der Öltank 10 weist eine Mehrzahl von den Öltank 10 in der Höhe durchziehenden ersten Rohrleitungen 20 und eine zweite Rohrleitung 30 auf. Es ist deutlich zu erkennen, dass die ersten Rohrleitungen 20 einen geringeren Durchmesser als die zweite Rohrleitung 30 aufweisen. In der zweiten Rohrleitung 30 ist ein Ventilator 40 angeordnet, der bevorzugt in Abhängigkeit von der Temperatur des Generators 90 drehzahlgeregelt ist. Besonders bevorzugt kann der Antriebsmotor des Ventilators 40 als Hydraulikmotor ausgebildet sein, sodass die das im Öltank 10 gelagerte Öl auch zum Antrieb des Ventilators 40 verwendet werden kann.

Im Innern des Kopfträgers der Windenergieanlage 100 ist ein erster Kühlluftkreislauf A und ein zweiter Kühlluftkreislauf B ausgebildet. Der erste Kühlluftkreislauf A steht mit der Mehrzahl der ersten Rohrleitungen 20 des Öltanks 10 kommunizierend in Verbindung, wohingegen der zweite Kühlluftkreislauf B hauptsächlich mit der zweiten Rohrleitung 30 kommunizierend in Verbindung steht.

Da der (luftgekühlte) Generator 90 bevorzugt im zweiten Kühlluftkreislauf B angeordnet ist, erfolgt die Kühlung des Generators 90 bevorzugt leistungsabhängig durch den in der zweiten Rohrleitung 30 angeordneten Ventilator 40.

In dem in Fig. 1 gezeigten besonders bevorzugt ausgestalteten Ausführungsbeispiel wird der zweite Kühlluftkreislauf B stromabwärts des Generators 90 mit dem ersten Kühlluftkreislauf zusammengeführt, woraufhin die Abluft in einem außen am Kopfträger oder am Turm angeordneten Luft/Luft-Kühler abgekühlt und der Unterseite des Öltanks 10 wieder zugeführt wird.

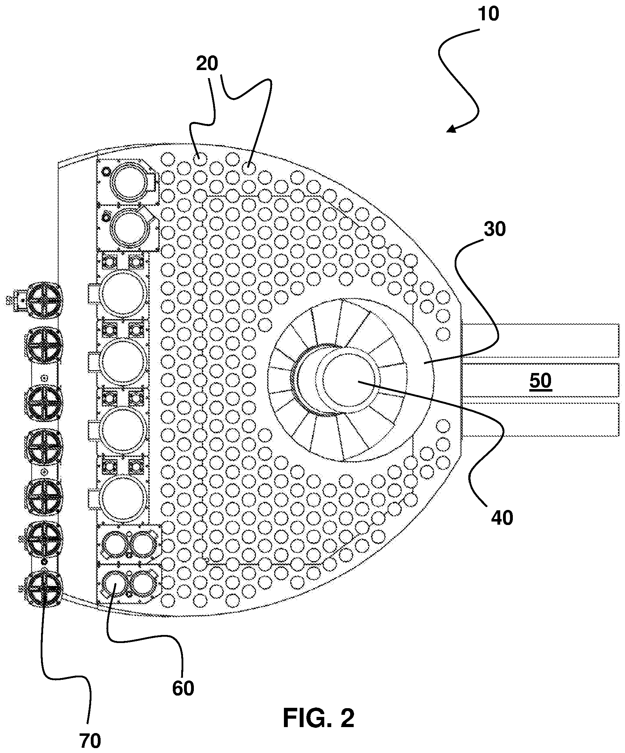

Fig. 2 zeigt eine Draufsicht auf den luftgekühlten Öltank nach der Erfindung. Aus dieser Ansicht wird deutlich, dass der Öltank 10 sich im Wesentlichen in einer Ebene erstreckt, wobei die Rohrleitungen 20, 30 den Öltank 10 von unten nach oben durchziehen und der Rücklauf 50 der Schmierölleitungen in der Ebene des Öltanks 10 verläuft.

Ohne weiteres ist die Mehrzahl von ersten Rohrleitungen 20 zu erkennen, deren Gesamtdurchtrittsfläche in etwa der Durchtrittsfläche der zweiten Rohrleitung 30 entspricht.

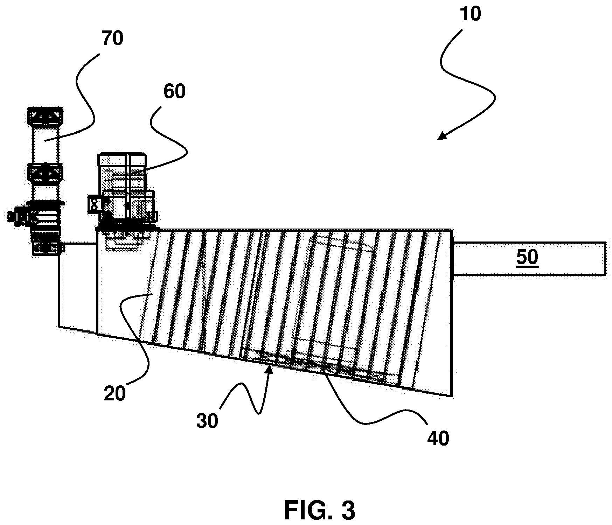

In der Figur links sind Ölpumpen 60 und das Öl reinigende Filtereinrichtungen 70 angeordnet. Insbesondere sind die Ölpumpen 60 im Öltank 10 dem Rücklauf 50 gegenüberliegend angeordnet, sodass das in den Öltank 10 rücklaufende Öl an den Rohrleitungen 20 vorbei zwangsgeführt und gekühlt wird. Dass sich die Anordnung dieser Einrichtungen auf dem Öltank 10 auf die Kühlung des Öls nicht störend auswirkt, zeigt die Seitenansicht des luftgekühlten Öltanks 10 aus Fig. 3.

Insbesondere ist zu erkennen, dass der Öltank 10 im Querschnitt als rechtwinkliges Trapez ausgebildet ist, wobei die schräg zur oberen Oberfläche des Öltanks 10 verlaufenden Rohrleitungen 20, 30 senkrecht auf die untere Oberfläche des Öltanks 10 führen.

## Patentansprüche

1. Luftgekühlter Öltank (10) mit einer Mehrzahl von den Öltank (10) durchziehenden, zur Durchleitung von Kühlluft eingerichteten ersten Rohrleitungen (20) mit im Wesentlichen identischem Durchmesser,
**gekennzeichnet durch**
eine den Öltank (10) durchziehende, zur Durchleitung von Kühlluft eingerichtete zweite Rohrleitung (30), in deren Durchmesser ein Ventilator (40) angeordnet ist,
wobei der Durchmesser der zweiten Rohrleitung (30) größer als der Durchmesser der ersten Rohrleitungen (20) ist.

2. Öltank (10) nach Anspruch 1, **dadurch gekennzeichnet, dass** der Antriebsmotor des Ventilators (40) ein Hydraulikmotor ist.

3. Öltank (10) nach einem der vorhergehenden Ansprüche, **dadurch gekennzeichnet, dass** die Durchtrittsfläche aller ersten Rohrleitungen (20) der Durchtrittsfläche der zweiten Rohrleitung (30) entspricht.

4. Öltank (10) nach einem der vorhergehenden Ansprüche, **dadurch gekennzeichnet, dass** die ersten Rohrleitungen (20) Innenrippen aufweisen.

5. Öltank (10) nach einem der vorhergehenden Ansprüche, **dadurch gekennzeichnet, dass** die ersten Rohrleitungen (20) und die zweite Rohrleitung (30) parallel angeordnet sind.

6. Windenergieanlage (100) mit einem luftgekühlten Öltank (10), **dadurch gekennzeichnet, dass** der luftgekühlte Öltank (10)
- eine Mehrzahl von den Öltank (10) durchziehenden, zur Durchleitung von Kühlluft eingerichteten ersten Rohrleitungen (20) mit im Wesentlichen identischem Durchmesser und
- eine den Öltank (10) durchziehende, zur Durchleitung von Kühlluft eingerichtete zweite Rohrleitung (30), deren Durchmesser größer als der Durchmesser der ersten Rohrleitungen (20) ist,
aufweist,
wobei die ersten Rohrleitungen (20) mit einem ersten Kühlluftkreislauf (A) und die zweite (30) Rohrleitung mit einem zweiten Kühlluftkreislauf (B) kommunizierend in Verbindung stehen.

7. Windenergieanlage (100) nach Anspruch 6, **dadurch gekennzeichnet, dass** der Generator (90) der Windenergieanlage (100) im zweiten Kühlluftkreislauf (B) angeordnet ist.

8. Windenergieanlage (100) nach einem der Ansprüche 6 und 7, **dadurch gekennzeichnet, dass** der erste Kühlluftkreislauf (A) und der zweite Kühlluftkreislauf (B) geschlossen ausgebildet sind.

9. Windenergieanlage (100) nach einem der Ansprüche 6 bis 8, **dadurch gekennzeichnet, dass** der zweite Kühlluftkreislauf (B) stromabwärts des Generators (90) mit dem ersten Kühlluftkreislauf (A) zusammengeführt ist.

## Claims

1. Air-cooled oil tank (10) having a plurality of first pipelines (20) passing through the oil tank (10) which are designed for the passage of cooling air and have a substantially identical diameter, **characterized by** a second pipeline (30) passing through the oil tank (10) which is designed for the passage of cooling air and in the diameter of which a fan (40) is arranged, the diameter of the second pipeline (30) being greater than the diameter of the first pipelines (20).

2. Oil tank (10) according to claim 1, **characterized in that** the drive motor of the fan (40) is a hydraulic motor.

3. Oil tank (10) according to either of the preceding claims, **characterized in that** the passage surface area of all the first pipelines (20) corresponds to the passage surface area of the second pipeline (30).

4. Oil tank (10) according to any of the preceding claims, **characterized in that** the first pipelines (20) have inner ribs.

5. Oil tank (10) according to any of the preceding claims, **characterized in that** the first pipelines (20) and the second pipeline (30) are arranged in parallel.

6. Wind turbine (100) having an air-cooled oil tank (10), **characterized in that** the air-cooled oil tank (10)
- comprises a plurality of first pipelines (20) passing through the oil tank (10) which are designed for the passage of cooling air and have a substantially identical diameter, and
- comprises a second pipeline (30) passing through the oil tank (10) which is designed for the passage of cooling air and of which the diameter is greater than the diameter of the first pipelines (20), the first pipelines (20) being communicatively connected to a first cooling-air circuit (A) and the second pipeline (30) being communicatively connected to a second cooling-air circuit (B).

7. Wind turbine (100) according to claim 6, **characterized in that** the generator (90) of the wind turbine (100) is arranged in the second cooling-air circuit (B).

8. Wind turbine (100) according to either claim 6 or claim 7, **characterized in that** the first cooling-air circuit (A) and the second cooling-air circuit (B) are closed.

9. Wind turbine (100) according to any of claims 6 to 8, **characterized in that** the second cooling-air circuit (B) merges with the first cooling-air circuit (A) downstream of the generator (90).

## Revendications

1. Réservoir d'huile refroidi par air (10) comprenant une pluralité de premières conduites (20) de diamètre sensiblement identique traversant le réservoir d'huile (10) et conçues pour le passage d'air de refroidissement,
**caractérisé par** une seconde conduite (30) traversant le réservoir d'huile (10) et conçue pour le passage d'air de refroidissement et dans le diamètre duquel est agencé un ventilateur (40),
le diamètre de la seconde conduite (30) étant supérieur à celui des premières conduites (20).

2. Réservoir d'huile (10) selon la revendication 1, **caractérisé en ce que** le moteur d'entraînement du ventilateur (40) est un moteur hydraulique.

3. Réservoir d'huile (10) selon l'une des revendications précédentes, **caractérisé en ce que** la surface de passage de toutes les premières conduites (20) correspond à la surface de passage de la seconde conduite (30).

4. Réservoir d'huile (10) selon l'une des revendications précédentes, **caractérisé en ce que** les premières conduites (20) présentent des nervures intérieures.

5. Réservoir d'huile (10) selon l'une des revendications précédentes, **caractérisé en ce que** les premières conduites (20) et la seconde conduite (30) sont disposées parallèlement.

6. Installation d'énergie éolienne (100) comprenant un réservoir d'huile refroidi par air (10), **caractérisée en ce que** le réservoir d'huile refroidi par air (10) comprend :
- une pluralité de premières conduites (20) de diamètre sensiblement identique traversant le réservoir d'huile (10) et conçues pour le passage d'air de refroidissement, et
- une seconde conduite (30) traversant le réservoir d'huile (10) et conçue pour le passage d'air de refroidissement, et dont le diamètre est supérieur à celui des premières conduites (20), les premières conduites (20) communiquant avec un premier circuit d'air de refroidissement (A) et la seconde conduite (30) communiquant avec un second circuit d'air de refroidissement (B).

7. Installation d'énergie éolienne (100) selon la revendication 6, **caractérisée en ce que** le générateur (90) de l'installation d'énergie éolienne (100) est disposé dans le second circuit d'air de refroidissement (B).

8. Installation d'énergie éolienne (100) selon l'une des revendications 6 et 7, **caractérisée en ce que** le premier circuit d'air de refroidissement (A) et le second circuit d'air de refroidissement (B) ont une configuration fermée.

9. Installation d'énergie éolienne (100) selon l'une des revendications 6 à 8, **caractérisée en ce que** le second circuit d'air de refroidissement (B) disposé en aval du générateur (90) est fusionné avec le premier circuit d'air de refroidissement (A).
